# EUROPEAN PATENT SPECIFICATION

(11) **EP 3 957 545 B1**
(45) Date of publication and mention of the grant of the patent: **03.05.2023**
(21) Application number: 21190378.6
(22) Date of filing: 09.08.2021
(51) Int. Cl.: B62B 7/06

(54) **FOLDING FRAME FOR STROLLERS, BABY CARRIAGES OR THE LIKE**
KLAPPRAHMEN FÜR KINDERWAGEN, BABYTRAGEN ODER DERGLEICHEN
CADRE PLIANT POUR POUSSETTES, LANDAUS OU SIMILAIRES

(30) Priority: 20.08.2020 IT 202000020284
(43) Date of publication of application: 23.02.2022
(73) Proprietor: L'Inglesina Baby S.p.A., 36077 Altavilla Vicentina (VI) (IT)
(72) Inventor: MARCHIORI, Nicola, 36043 CAMISANO VICENTINO VI (IT); TOMASI, Ivan, 36051 CREAZZO VI (IT); BARETTA, Dario, 30032 FIESSO D'ARTICO VE (IT)
(74) Representative: Modiano, Micaela Nadia

(56) References cited:
- EP-A1- 3 601 012
- CN-A- 107 757 693
- US-A- 5 845 924

## Description

The present invention relates to a folding frame for strollers, baby carriages and the like.

Folding frames for strollers or baby carriages are known which are constituted essentially by a lower framework, which comprises one or two front posts and one or two rear posts, which support in a lower region respective wheel assemblies, and by at least one upper post, known in the jargon as "handle tube", which ends upward with the grip or handle of the frame and is movable with respect to the lower framework.

In some cases, in order to allow the closure and opening of the frame, the handle tube or tubes move, with respect to the front posts, with an exclusively translational movement (typically parallel to the direction of extension of the front posts), with a combined rotary and translational motion, or with a rotary motion.

With particular reference to so called "clamshell" folding frames, a typical constructive solution entails that the front and rear posts are mutually hinged about an articulation axis while the handle tube(s) is/are connected kinematically by means of at least one linkage and/or adjustable translation sleeves to the front post, and by virtue of traction means which connect each handle tube to the respective rear post and at least one lower tension member which connects the one or more rear posts to the one or more front posts.

This constructive solution makes it possible, in the step for closing the frame, to bring the front posts to a position that is angularly closer to the respective rear posts while the handle tubes, due to a combined rotary and translational motion or a translational motion, are arranged, in the closing condition, substantially parallel to the rear posts with the grip arranged oppositely with respect to the wheels.

The locking of the frame in the open condition can be obtained by providing locking means which act between the handle tube and the respective front post in the contact region, between the linkage and the handle tube, between the handle tube and tension means, or between the linkage and the rear post.

Disengagement of the locking means is typically performed by acting on actuation means arranged on the handle tubes or at the grip.

The frames briefly described above, while being widely used, are not however free from drawbacks.

In particular, a certain difficulty is encountered in bringing the frame from the open condition to the closed condition and vice versa.

EP3601012 in the name of the same Applicant discloses a frame for strollers comprising a lower framework having at least one front post and at least one rear post which are connected in a lower region to respective wheel assemblies; each rear post is movable on command, with respect to the front post or posts, with a rotary motion about a first articulation axis during the transition of the folding frame from an extended open condition to a collapsed closed condition and vice versa.

Each rear post is movable on command with respect to a coupling body which is integral with the respective front post.

The lower framework is connected kinematically to at least one handle tube, which can move with respect to the respective front post along a movement trajectory which has at least one component that is parallel to the main direction of extension of the front post, in order to move between an active condition, in which the grip is arranged so as to be spaced and upward with respect to the end portion of the lower framework during use, and an inactive condition, in which the grip is arranged closer to the end portion of the lower framework during use .

The lower framework supports an actuation device which has an actuation grip and is connected kinematically to at least one device for interconnection between at least one rear post and at least one respective front post in order to pass, as a consequence of the transition of the actuation grip between the first position and the second position, between an extended position, in which the respective front and rear posts are kept angularly spaced, and a folded position, in which the respective front and rear posts are kept angularly closer.

The folding frame described in EP3601012 further comprises at least one first body for locking the interconnection device in the extended position and at least one second locking body which acts, when the interconnection device is in the extended position, between a front post and the respective handle tube in order to keep the handle tube locked in the active position.

The folding frame comprises at least one element for interconnection between each rear post and the respective handle tube, which is adapted to determine the movement of the handle tube between the inactive position and the active position and vice versa following the transition of the interconnection device between the extended condition and the folded condition and vice versa.

Specifically, the actuation grip is supported by the interconnection device and can rotate about a second articulation axis which is substantially parallel to the first articulation axis.

The interconnection device comprises a toggle device which comprises a first connection body, connected kinematically to the rear post and associated with the actuation grip, and a second connection body, supported by the respective front post, which can rotate with respect to the first connection body about a third articulation axis which is substantially parallel to the first rotation axis.

The aim of the present invention is to provide a folding frame for strollers, baby carriages and the like that is capable of improving the background art in one or more of the aspects mentioned above.

Within this aim, an object of the present invention is to provide a folding frame for strollers, baby carriages and the like that is extremely compact.

Not the least object of the invention is to provide a folding frame for strollers, baby carriages and the like that is highly reliable, relatively easy to provide and has competitive costs.

This aim and these and other objects which will become more apparent hereinafter are achieved by a folding frame for strollers, baby carriages and the like according to claim 1, optionally provided with one or more of the characteristics of the dependent claims.

Further characteristics and advantages of the invention will become more apparent from the description of some preferred but not exclusive embodiments of the folding frame for strollers, baby carriages and the like according to the invention, illustrated by way of non-limiting example in the accompanying drawings, wherein:

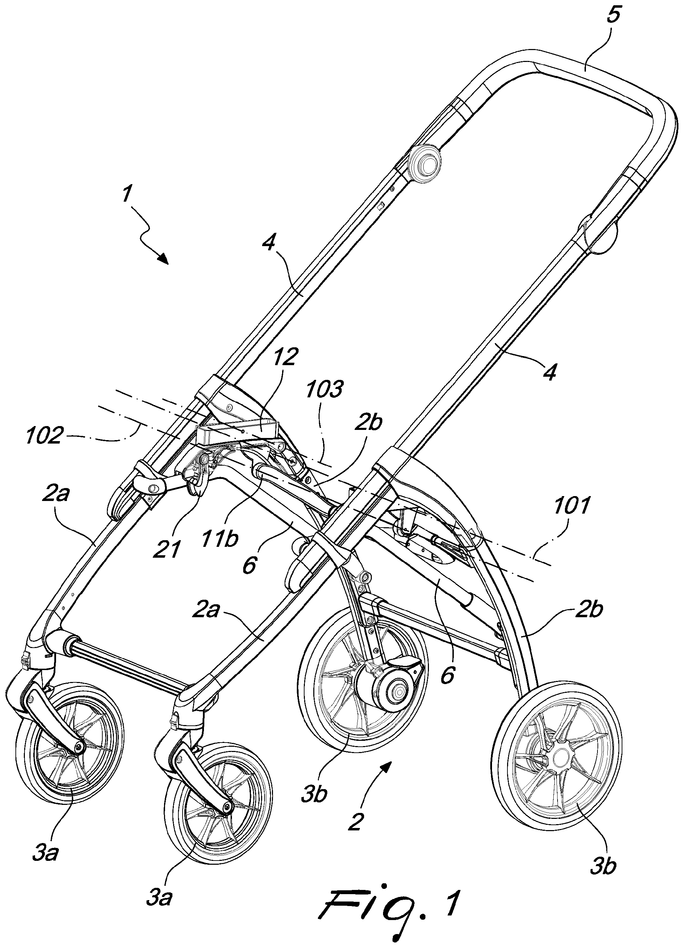

Figure 1 is a perspective view of the folding frame according to the invention;

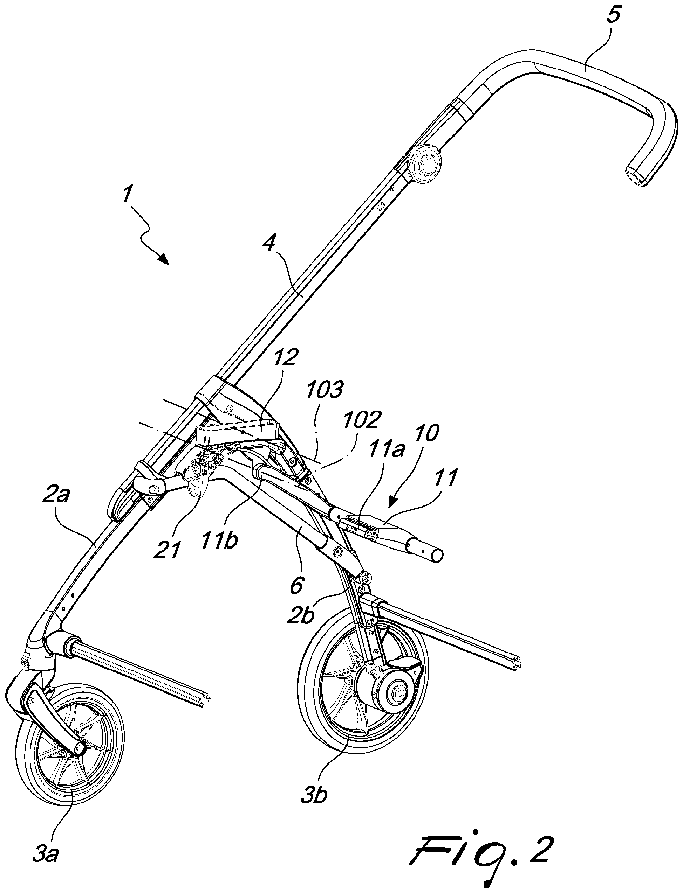

Figure 2 is again a perspective view from the front and in cross-section of the frame of Figure 1, for the sake of clarity;

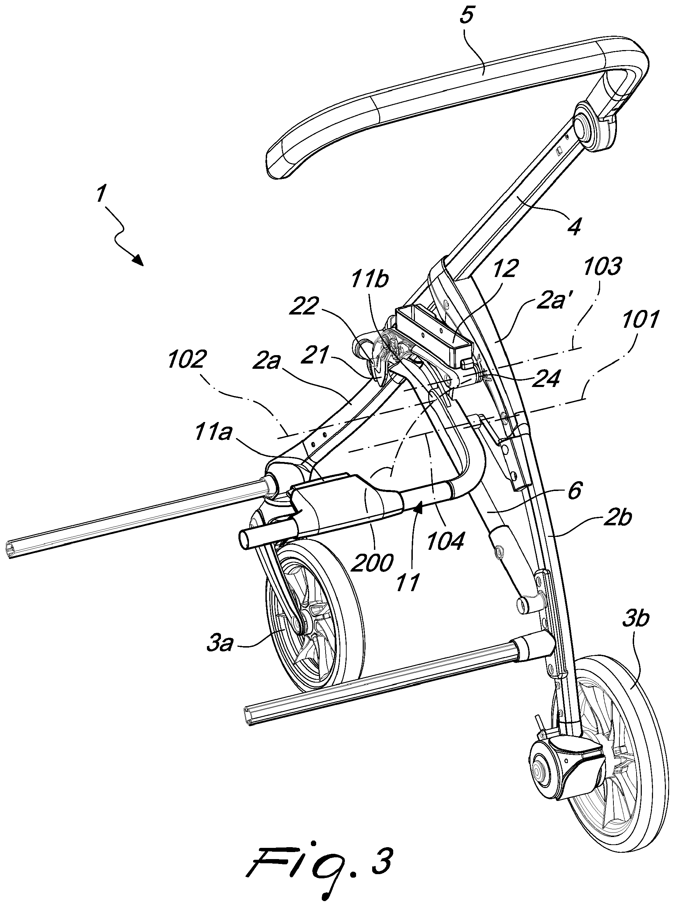

Figure 3 is a rear view of the cross-section of the frame of Figure 2;
Figures 4 to 7 are side views of the cross-section of the frame during the steps of transition from the extended open condition to the closed collapsed condition.

With reference to the figures, the folding frame for strollers, baby carriages or the like, according to the present invention, generally designated by the reference numeral 1, comprises a lower framework 2 having at least one front post 2a and at least one rear post 2b, which are connected in a lower region to respective wheel assemblies 3a, 3b.

With reference to the embodiment shown in the figures, the folding frame 1 has two front posts 2a connected to respective rear posts 2b.

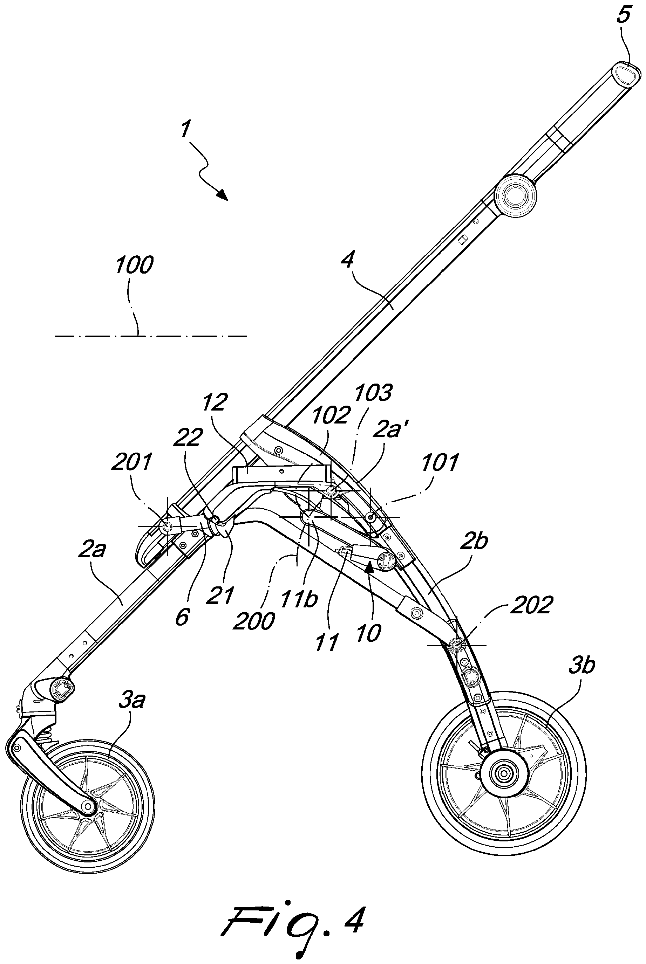

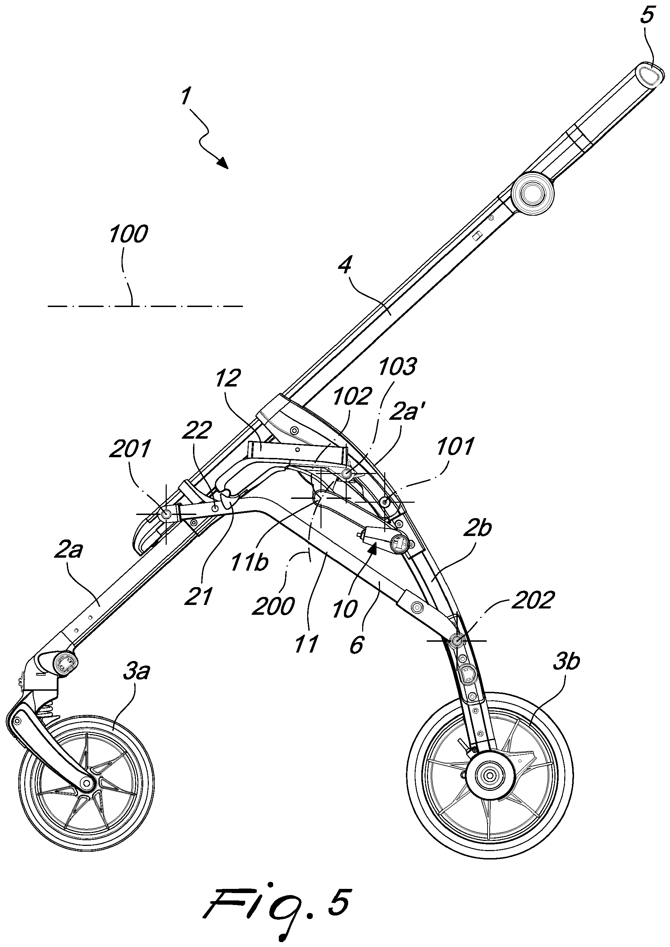

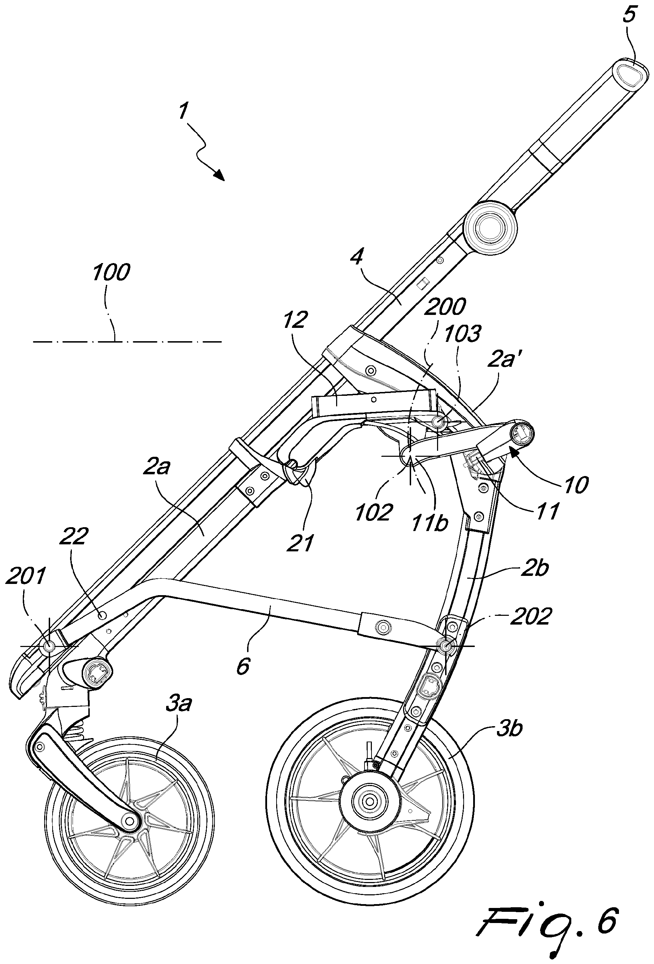

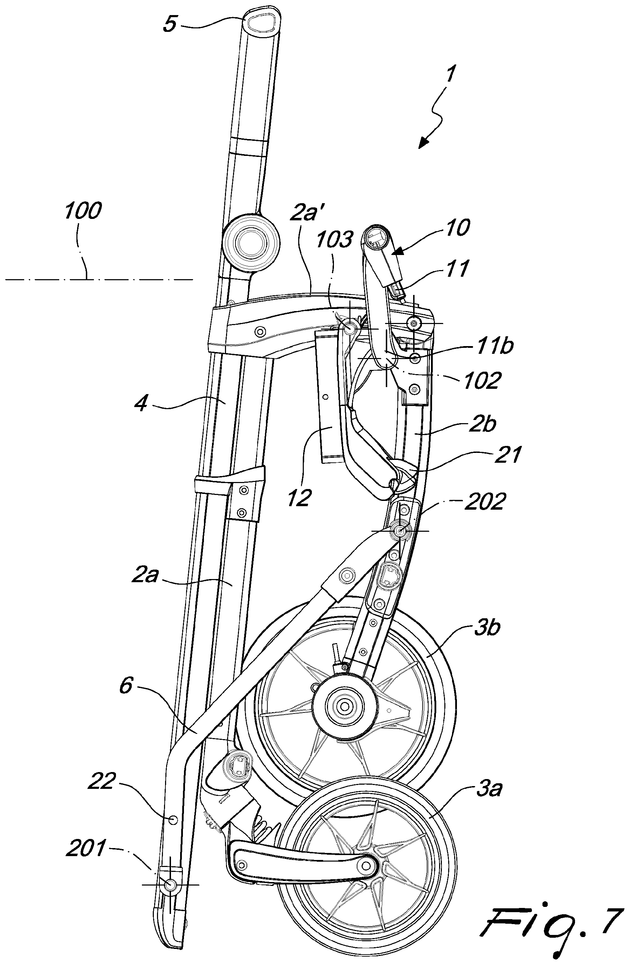

Each rear post 2b is movable on command, with respect to the respective at least one front post 2a, with a rotary motion about a first articulation axis, designated by the numeral 101, which is substantially transverse to the direction of longitudinal extension 100of the folding frame 1 during the transition of the folding frame 1 from an extended open condition to a collapsed closed condition and vice versa (shown in the sequence of Figures 4 to 7).

The lower framework 2 is connected kinematically to at least one handle tube 4 which forms at least one grip 5 and can move with respect to the at least one front post 2a along a movement trajectory that has at least one component that is parallel to the main direction of extension of the at least one front post 2a, in order to move between an active condition, in which the grip 5 is arranged so as to be spaced and upward with respect to the end portion of the lower framework 2 during use, and an inactive condition, in which the grip 5 is arranged closer to the end portion of the lower framework 2 during use.

Moreover, at least one connecting tension member 6 is arranged between the at least one rear post 2b and the at least one handle tube 4.

According to the present invention, the at least one rear post 2b supports an actuation device 10 which has an actuation grip 11 which is connected to an actuation portion 11b.

The actuation portion 11b can move on command between a first position and a second position and vice versa along an actuation trajectory 200.

The actuation device 10 is hinged to at least one interconnection device 12 about a second articulation axis 102 which is substantially parallel to the first articulation axis 101.

The interconnection device 12 is in turn supported by the front post 2a so that it can rotate about a third articulation axis 103 which is substantially parallel to the first and second articulation axes 101, 102.

As a consequence of the transition of the actuation grip 11 between a first position and a second position, the frame 1 is adapted to pass between an extended position, in which the respective front and rear posts 2a, 2b are kept angularly spaced, and a folded position, in which the respective front and rear posts 2a, 2b are moved angularly closer.

There is also at least one device for locking the folding frame 1 in an extended condition.

In particular, the locking device comprises a first locking body 21 which is associated with the interconnection device 12 and engages, when the frame 1 is in the extended condition, a respective engagement body 22 which is supported by the at least one handle tube 4 or by the connecting tension member 6.

Nothing forbids, naturally, the locking device from comprising a first locking body which is associated with a respective front post 2a and engages, when the frame 1 is in the extended condition, a respective engagement body which is supported by the respective handle tube 4.

Conveniently, the actuation device 10 is hinged to the at least one rear post 2b about a fourth articulation axis 104 which is substantially parallel to the first articulation axis 101.

According to a preferred embodiment, the fourth articulation axis 104 is arranged in an intermediate position between the grip 11 and the second articulation axis 102.

Advantageously, the front post 2a is integral with a tab 2a': the respective rear post 2b is, in particular, supported about the first articulation axis 101 by the tab 2a'.

Preferably, the third articulation axis 103 crosses, besides the interconnection body 12, also the front post 2a and in particular the tab 2a'.

Advantageously, the grip 11 has an actuation element 11a which can be actuated on command by the user in order to move the or each locking body 21 into disengagement from the respective engagement body 22.

Nothing forbids said actuation element 11a from being arranged on other elements of the folding frame 1, for example at the handle tubes 4; this solution is particularly advantageous if the locking device of the folding frame 1 in the extended condition acts between the front post 2a and the respective handle tube 4.

According to the invention, the interconnection device 12, as a consequence of the transition of the actuation portion 11b between the first position and the second position along the actuation trajectory 200, is adapted to rotate first in one direction of rotation and then in the opposite direction of rotation about the third articulation axis 103.

As shown in the sequence of Figures 4 to 7, during the transition from the open condition to the closed condition the interconnection device 12 in a first step is lifted (at the end opposite the third articulation axis 103) and then is returned downward once it has moved beyond a thrust reversal point.

In particular, by virtue of the action of the weight of the cradle or carrycot or car seat, if any, completion of said opening process is therefore facilitated during the transition from the closed condition to the open condition and completion of closure is facilitated during the transition from the open condition to the closed condition.

In practice, with the folding frame 1 in the open condition, by means of the actuation of the actuation portion 11a each locking body 21 is disengaged from the respective engagement body 22; the subsequent upward lifting of the grip 11 determines the movement of the actuation portion 11b along the trajectory 200 and consequently the movement of the interconnection device 12.

Preferably, the interconnection device 12 supports an engagement device for an element for accommodating a child which comprises a stroller, a bassinet, an infant car seat, or the like.

The or each tension member 6 is hinged, at its end portions, to the rear post 2b and to the respective handle tube 4 about respective hinge axes 201, 202 which are substantially parallel to the first articulation axis 101.

The or each handle tube can move, during the transition of the folding frame 1 from the extended condition to the collapsed condition and vice versa, with a translational motion with respect to the respective front post 2a along a direction that is substantially parallel to the front post 2a.

Preferably, the engagement body 22 is integral with said at least one tension member 6 and is arranged proximate to the handle tube 2a in order to ensure high rigidity.

Advantageously, it is possible to provide an elastic loading device, which comprises for example a torsion spring 24, which acts between the front post and the interconnection device 12.

Preferably, said torsion spring 24 acts at the third articulation axis 103 and is adapted to facilitate the opening action of the folding frame 1.

In practice it has been found that the invention achieves the intended aim and objects, providing a folding frame that is extremely compact and with a reliable kinematic system.

The invention thus conceived is susceptible of numerous modifications, all of which are within the scope of the accompanying claims.

Thus, for example, it is possible to provide for the use of cables or kinematic connection devices which act between the actuation device 10 and the actuation portion 11b.

In practice, the materials used, as long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A folding frame (1) for strollers, baby carriages or the like, comprising a lower framework (2) provided with at least one front post (2a) and at least one rear post (2b) which are connected in a lower region to respective wheel assemblies (3a, 3b), said at least one rear post (2b) being movable on command, with respect to said at least one front post (2a), with a rotary motion about a first articulation axis (101) which is substantially transverse to the direction of longitudinal extension (100) of said folding frame (1) during the transition of said folding frame (1) from an extended open condition to a collapsed closed condition and vice versa, said lower framework (2) being connected kinematically to at least one handle tube (4) which forms at least one grip (5) and can move with respect to said at least one front post (2a) along a movement trajectory that has at least one component that is parallel to the main direction of extension of said at least one front post (2a), in order to move between an active condition,in which said grip (5) is arranged so as to be spaced and upward with respect to the end portion of said lower framework (2) during use, and an inactive condition, in which said grip (5) is arranged closer to said end portion of said lower framework (2) during use, a connecting tension member (6) being arranged between said at least one rear post (2b) and said at least one handle tube (4), wherein said at least one rear post (2b) supports an actuation device (10) which has an actuation grip (11) which is connected to an actuation portion (11b) which can move on command between a first position and a second position and vice versa along an actuation trajectory (200), said actuation device (10) being hinged, about a second articulation axis (102) that is parallel to said first articulation axis (101), to at least one interconnection device (12) which is supported so that it can rotate about a third articulation axis (103) which is substantially parallel to said first and second articulation axes (101, 102) by said front post (2a), as a consequence of the transition of said actuation grip (11) between a first position and a second position, said frame (1) being adapted to pass between an extended position, in which the respective front and rear posts (2a, 2b) are kept angularly spaced, and a folded position, in which the respective front and rear posts (2a, 2b) are kept angularly closer, at least one device for locking said folding frame (1) in the extended condition being provided **characterized in that** said interconnection device (12), as a consequence of the transition of said actuation portion (11b) between said first position and said second position along said actuation trajectory (200), is adapted to rotate first in one direction of rotation and then in the opposite direction of rotation about said third articulation axis (103).

2. The folding frame (1) according to claim 1, **characterized in that** said locking device comprises at least one first locking body (21) which is associated with the interconnection device (12) and engages, when said frame (1) is in the extended condition, a respective engagement body (22) supported by said at least one handle tube (4) or by said connecting tension member (6).

3. The folding frame (1) according to claim 1, **characterized in that** said locking device comprises at least one first locking body (21) which is associated with a respective front post (2a) and engages, when said frame (1) is in the extended condition, a respective engagement body which is supported by said respective handle tube (4).

4. The folding frame (1) according to one or more of the preceding claims, **characterized in that** said actuation device (10) is hinged to said at least one rear post (2b) about a fourth articulation axis (104) which is substantially parallel to said first articulation axis (101).

5. The folding frame (1) according to one or more of the preceding claims, **characterized in that** said grip (11) has an actuation element (11a) which can be actuated on command by the user in order to move said at least one locking body (21) into disengagement from the respective engagement body (22).

6. The folding frame (1) according to one or more of the preceding claims, **characterized in that** said interconnection device (12) supports an engagement device for an element for accommodating a child which comprises a stroller, a bassinet, an infant car seat, or the like.

7. The folding frame (1) according to one or more of the preceding claims, **characterized in that** said front post (2a) is integral with a tab (2a'), the respective rear post (2b) being supported about said first articulation axis (101) by said tab (2a').

8. The folding frame (1) according to one or more of the preceding claims, **characterized in that** said tension member (6) is hinged, at its end portions, to said rear post (2b) and to the respective handle tube (4) about respective hinge axes (201, 202) which are substantially parallel to said first articulation axis (101).

9. The folding frame (1) according to one or more of the preceding claims, **characterized in that** said handle tube can move, during the transition of said folding frame (1) from said extended condition to said collapsed condition and vice versa, with a translational motion with respect to the respective front post (2a) along a direction that is substantially parallel to said handle tube (4).

10. The folding frame (1) according to one or more of the preceding claims, **characterized in that** said engagement body (22) is integral with said at least one tension member (6) and is arranged proximately to said handle tube (4).

11. The folding frame (1) according to one or more of the preceding claims, **characterized in that** the weight of said element for accommodating a child is adapted to determine, during the transition from the open condition to the closed condition, the completion of said opening process and, during the transition from the open condition to the closed condition, the completion of closure.

12. The folding frame (1) according to one or more of the preceding claims, **characterized in that** it comprises at least one elastic loading device which acts between at least one front post (2a) and the respective interconnection device (12) adapted to facilitate the opening action of said folding frame (1).

13. The folding frame (1) according to one or more of the preceding claims, **characterized in that** said third articulation axis (103) crosses said interconnection body (12) and the respective front post (2a), in particular at said tab (2a').

## Patentansprüche

1. Ein Klapprahmen (1) für Kinderwägen, Babywägen oder dergleichen, der einen unteren Rahmen (2) umfasst, ausgestattet mit mindestens einem vorderen Holm (2a) und mindestens einem hinteren Holm (2b), die in einem unteren Bereich mit dazugehörigen Radaufbauten (3a, 3b) verbunden sind; wobei der mindestens eine hintere Holm (2b) auf Befehl während des Übergangs des Klapprahmens (1) von einem ausgeklappten offenen Zustand in einen zusammengeklappten geschlossenen Zustand und umgekehrt mit Bezug auf den mindestens einen vorderen Holm (2a) mit einer Drehbewegung um eine erste Gelenkachse (101) beweglich ist, welche im Wesentlichen transversal zur Richtung der Längserstreckung (100) des Klapprahmens (1) ist, wobei der untere Rahmen (2) kinematisch mit mindestens einem Lenkrohr (4) verbunden ist, das mindestens einen Griff (5) bildet und sich mit Bezug auf den mindestens einen vorderen Holm (2a) entlang einer Bewegungsbahn bewegen kann, die mindestens eine Komponente hat, welche parallel zur Haupterstreckungsrichtung des mindestens einen vorderen Holms (2a) ist, um sich zwischen einem aktiven Zustand, in welchem der Griff (5) angeordnet ist, um während des Gebrauchs vom Endabschnitt des unteren Rahmens (2) beabstandet und oberhalb desselben zu liegen, und einem inaktiven Zustand zu bewegen, in welchem der Griff (5) während des Gebrauchs näher an dem Endabschnitt des unteren Rahmens (2) angeordnet ist; wobei ein Verbindungs-Spannglied (6) zwischen dem mindestens einen hinteren Holm (2b) und dem mindestens einen Lenkrohr (4) angeordnet ist, wobei der mindestens eine hintere Holm (2b) eine Betätigungsvorrichtung (10) trägt, die einen Betätigungsgriff (11) hat, welcher mit einem Betätigungsabschnitt (11b) verbunden ist, der sich auf Befehl entlang einer Betätigungsbahn (200) zwischen einer ersten Position und einer zweiten Position und umgekehrt bewegen kann; wobei die Betätigungsvorrichtung (10) um eine zweite Gelenkachse (102), die parallel zu der ersten Gelenkachse (101) ist, schwenkbar mit mindestens einer Verbindungsvorrichtung (12) verbunden ist, welche drehbar um eine dritte Gelenkachse (103) auf den vorderen Holmen (2a) gelagert ist, die im Wesentlichen parallel zu den ersten und zweiten Gelenkachsen (101, 102) ist; wobei der Rahmen (1) ausgebildet ist, um infolge des Wechsels des Betätigungsgriffs (11) zwischen einer ersten Position und einer zweiten Position zwischen einer ausgeklappten Position, in welcher die jeweiligen vorderen und hinteren Holme (2a, 2b) winklig beabstandet gehalten werden, und einer zusammengeklappten Position zu wechseln, in welcher die jeweiligen vorderen und hinteren Holme (2a, 2b) winklig näher beieinander gehalten werden; wobei mindestens eine Vorrichtung zum Arretieren des Klapprahmens (1) im ausgeklappten Zustand bereitgestellt ist; **dadurch gekennzeichnet, dass** die Verbindungsvorrichtung (12) ausgebildet ist, um sich infolge des Wechsels des Betätigungsabschnitts (11b) zwischen der ersten Position und der zweiten Position entlang der Betätigungsbahn (200) zuerst in eine Drehrichtung und dann in die entgegengesetzte Drehrichtung um die dritte Gelenkachse (103) zu drehen.

2. Der Klapprahmen (1) gemäß Anspruch 1, **dadurch gekennzeichnet, dass** die Arretiervorrichtung mindestens einen ersten Arretierkörper (21) umfasst, der mit der Verbindungsvorrichtung (12) verknüpft ist und, wenn der Rahmen (1) sich im ausgeklappten Zustand befindet, mit einem dazugehörigen Eingriffskörper (22) in Eingriff steht, welcher von dem mindestens einen Lenkrohr (4) oder von dem Verbindungs-Spannglied (6) getragen ist.

3. Der Klapprahmen (1) gemäß Anspruch 1, **dadurch gekennzeichnet, dass** die Arretiervorrichtung mindestens einen ersten Arretierkörper (21) umfasst, welcher mit einem entsprechenden vorderen Holm (2a) verknüpft ist und, wenn der Rahmen (1) sich im ausgeklappten Zustand befindet, mit einem dazugehörigen Eingriffskörper in Eingriff steht, der von dem entsprechenden Lenkrohr (4) getragen ist.

4. Der Klapprahmen (1) gemäß einem oder mehreren der obigen Ansprüche, **dadurch gekennzeichnet, dass** die Betätigungsvorrichtung (10) schwenkbar um eine vierte Gelenkachse (104) mit dem mindestens einen hinteren Holm (2b) verbunden ist, die im Wesentlichen parallel zu der ersten Gelenkachse (101) ist.

5. Der Klapprahmen (1) gemäß einem oder mehreren der obigen Ansprüche, **dadurch gekennzeichnet, dass** der Griff (11) ein Betätigungselement (11a) hat, das auf Befehl vom Benutzer betätigt werden kann, um den mindestens einen Arretierkörper (21) außer Eingriff mit dem dazugehörigen Eingriffskörper (22) zu bewegen.

6. Der Klapprahmen (1) gemäß einem oder mehreren der obigen Ansprüche, **dadurch gekennzeichnet, dass** die Verbindungsvorrichtung (12) eine Eingriffsvorrichtung für ein Element zur Aufnahme eines Kindes trägt; umfassend einen Buggy, einen Babykorb, einen Kinderautositz oder dergleichen.

7. Der Klapprahmen (1) gemäß einem oder mehreren der obigen Ansprüche, **dadurch gekennzeichnet, dass** der vordere Holm (2a) integral mit einem Anhängsel (2a') ist, wobei der entsprechende hintere Holm (2a) um die erste Gelenkachse (101) von dem Anhängsel (2a') getragen ist.

8. Der Klapprahmen (1) gemäß einem oder mehreren der obigen Ansprüche, **dadurch gekennzeichnet, dass** das Spannglied (6) an seinen Endabschnitten um entsprechende Scharnierachsen (201, 202), die im Wesentlichen parallel zu der ersten Gelenkachse (101) sind, schwenkbar mit dem hinteren Holm (2b) und mit dem entsprechenden Lenkrohr (4) verbunden ist.

9. Der Klapprahmen (1) gemäß einem oder mehreren der obigen Ansprüche, **dadurch gekennzeichnet, dass** sich das Lenkrohr während des Übergangs des Klapprahmens (1) aus dem ausgeklappten Zustand in den zusammengeklappten Zustand und umgekehrt mit einer Translationsbewegung mit Bezug auf den jeweiligen vorderen Holm (2a) in einer Richtung bewegen kann, die im Wesentlichen parallel zu dem Lenkrohr (4) ist.

10. Der Klapprahmen (1) gemäß einem oder mehreren der obigen Ansprüche, **dadurch gekennzeichnet, dass** der Eingriffskörper (22) integral mit dem mindestens einen Spannglied (6) vorliegt und nahe dem Lenkrohr (4) angeordnet ist.

11. Der Klapprahmen (1) gemäß einem oder mehreren der obigen Ansprüche, **dadurch gekennzeichnet, dass** das Gewicht des Elements zur Aufnahme eines Kindes ausgebildet ist, während des Übergangs aus dem offenen Zustand in den geschlossenen Zustand den Abschluss des Öffnungsvorgangs und während des Übergangs aus dem offenen Zustand in den geschlossenen Zustand den Abschluss des Schließvorgangs zu bestimmen.

12. Der Klapprahmen (1) gemäß einem oder mehreren der obigen Ansprüche, **dadurch gekennzeichnet, dass** er mindestens eine elastische Spannvorrichtung umfasst, die zwischen mindestens einem vorderen Holm (2a) und der dazugehörigen Verbindungsvorrichtung (12) wirkt und ausgebildet ist, um den Öffnungsvorgang des Klapprahmens (1) zu erleichtern.

13. Der Klapprahmen (1) gemäß einem oder mehreren der obigen Ansprüche, **dadurch gekennzeichnet, dass** die dritte Gelenkachse (103) den Verbindungskörper (12) und den entsprechenden vorderen Holm (2a) quert, insbesondere an dem Anhängsel (2a').

## Revendications

1. Châssis pliant (1) pour poussettes, landaus ou analogue, comportant une armature inférieure (2) pourvue d'au moins un montant avant (2a) et d'au moins un montant arrière (2b) qui sont reliés dans une zone inférieure à des ensembles de roues (3a, 3b) respectifs, ledit au moins un montant arrière (2b) étant mobile sur commande, par rapport audit au moins un montant avant (2a), avec un mouvement rotatif autour d'un premier axe d'articulation (101) qui est sensiblement transversal à la direction d'extension longitudinale (100) dudit châssis pliant (1) pendant la transition dudit châssis pliant (1) d'un état ouvert déployé à un état fermé aplati et vice versa, ladite armature inférieure (2) étant cinéma-tiquement reliée à au moins un tube de poignée (4) qui forme au moins un élément de préhension (5) et peut se déplacer par rapport audit au moins un montant avant (2a) le long d'une trajectoire de déplacement qui a au moins une composante qui est parallèle à la direction d'extension principale dudit au moins un montant avant (2a), afin de se déplacer entre un état actif, dans lequel ledit élément de préhension (5) est agencé de manière à être espacé et vers le haut par rapport à la partie d'extrémité de ladite armature inférieure (2) pendant l'utilisation, et un état inactif, dans lequel ledit élément de préhension (5) est agencé plus près de ladite partie d'extrémité de ladite armature inférieure (2) pendant l'utilisation, un élément de tension et de liaison (6) étant agencé entre ledit au moins un montant arrière (2b) et ledit au moins un tube de poignée (4), dans lequel ledit au moins un montant arrière (2b) supporte un dispositif d'actionnement (10) qui a une poignée d'actionnement (11) qui est reliée à une partie d'actionnement (11b) qui peut se déplacer sur commande entre une première position et une seconde position et vice versa le long d'une trajectoire d'actionnement (200), ledit dispositif d'actionnement (10) étant articulé, autour d'un deuxième axe d'articulation (102) qui est parallèle audit premier axe d'articulation (101), sur au moins un dispositif d'interconnexion (12) qui est supporté de sorte qu'il peut tourner autour d'un troisième axe d'articulation (103) qui est sensiblement parallèle auxdits premier et deuxième axes d'articulation (101, 102) par ledit montant avant (2a), en conséquence de la transition de ladite poignée d'actionnement (11) entre une première position et une seconde position, ledit châssis (1) étant adapté pour passer entre une position déployée, dans laquelle les montants avant et arrière (2a, 2b) respectifs sont maintenus angulairement espacés, et une position pliée, dans laquelle les montants avant et arrière (2a, 2b) respectifs sont maintenus angulairement rapprochés, au moins un dispositif pour bloquer ledit châssis pliant (1) dans l'état déployé étant prévu, **caractérisé en ce que** ledit dispositif d'interconnexion (12), en conséquence de la transition de ladite partie d'actionnement (11) entre ladite première position et ladite seconde position le long de ladite trajectoire d'actionnement (200), est adapté pour tourner d'abord dans un sens de rotation et ensuite dans le sens de rotation opposé autour dudit troisième axe d'articulation (103).

2. Châssis pliant (1) selon la revendication 1, **caractérisé en ce que** ledit dispositif de blocage comporte au moins un premier corps de blocage (21) qui est associé au dispositif d'interconnexion (12) et est en prise, lorsque ledit châssis (1) est dans l'état déployé, avec un corps de prise (22) respectif supporté par ledit au moins un tube de poignée (4) ou par ledit élément de tension et de liaison (6).

3. Châssis pliant (1) selon la revendication 1, **caractérisé en ce que** ledit dispositif de blocage comporte au moins un premier corps de blocage (21) qui est associé à un montant avant (2a) respectif et est en prise, lorsque ledit châssis (1) est dans l'état déployé, avec un corps de prise respectif qui est supporté par ledit tube de poignée (4) respectif.

4. Châssis pliant (1) selon une ou plusieurs des revendications précédentes, **caractérisé en ce que** ledit dispositif d'actionnement (10) est articulé sur ledit au moins un montant arrière (2b) autour d'un quatrième axe d'articulation (104) qui est sensiblement parallèle audit premier axe d'articulation (101).

5. Châssis pliant (1) selon une ou plusieurs des revendications précédentes, **caractérisé en ce que** ledit élément de préhension (11) a un élément d'actionnement (11a) qui peut être actionné sur commande par l'utilisateur afin d'amener ledit au moins un corps de blocage (21) à se libérer du corps de prise (22) respectif .

6. Châssis pliant (1) selon une ou plusieurs des revendications précédentes, **caractérisé en ce que** ledit dispositif d'interconnexion (12) supporte un dispositif de prise pour un élément destiné à recevoir un enfant qui comporte une poussette, un berceau, un siège-auto pour bébé ou analogue.

7. Châssis pliant (1) selon une ou plusieurs des revendications précédentes, **caractérisé en ce que** ledit montant avant (2a) est solidaire d'une languette (2a'), le montant arrière (2b) respectif étant supporté autour dudit premier axe d'articulation (101) par ladite languette (2a').

8. Châssis pliant (1) selon une ou plusieurs des revendications précédentes, **caractérisé en ce que** ledit élément de tension (6) est articulé, à ses parties d'extrémité, sur ledit montant arrière (2b) et sur le tube de poignée (4) respectif autour d'axes de charnière (201, 202) respectifs qui sont sensiblement parallèles audit premier axe d'articulation (101).

9. Châssis pliant (1) selon une ou plusieurs des revendications précédentes, **caractérisé en ce que** ledit tube de poignée peut se déplacer, pendant la transition dudit châssis pliant (1) dudit état déployé audit état aplati et vice versa, avec un mouvement de translation par rapport au montant avant (2a) respectif le long d'une direction qui est sensiblement parallèle audit tube de poignée (4).

10. Châssis pliant (1) selon une ou plusieurs des revendications précédentes, **caractérisé en ce que** ledit corps de prise (22) est solidaire dudit au moins un élément de tension (6) et est agencé près dudit tube de poignée (4).

11. Châssis pliant (1) selon une ou plusieurs des revendications précédentes, **caractérisé en ce que** le poids dudit élément destiné à recevoir un enfant est adapté pour déterminer, pendant la transition de l'état ouvert à l'état fermé, l'achèvement dudit processus d'ouverture et, pendant la transition de l'état ouvert à l'état fermé, l'achèvement de la fermeture.

12. Châssis pliant (1) selon une ou plusieurs des revendications précédentes, **caractérisé en ce qu'**il comporte au moins un dispositif de chargement élastique qui agit entre au moins un montant avant (2a) et le dispositif d'interconnexion (12) respectif adapté pour faciliter l'action d'ouverture dudit châssis pliant (1).

13. Châssis pliant (1) selon une ou plusieurs des revendications précédentes, **caractérisé en ce que** ledit troisième axe d'articulation (103) croise ledit corps d'interconnexion (12) et le montant avant (2a) respectif, en particulier au niveau de ladite languette (2a').
